(19) Europäisches Patentamt
European Patent Office
Office européen des brevets

(11) **EP 1 675 283 B1**

(12) **EUROPEAN PATENT SPECIFICATION**

(45) Date of publication and mention
of the grant of the patent:
**18.04.2007 Bulletin 2007/16**

(51) Int Cl.:
***H04B 10/17*** *(2006.01)*

(21) Application number: **04293122.0**

(22) Date of filing: **23.12.2004**

(54) **Method of controlling the gain of a raman amplifier**

Verfahren zur Steuerung der Verstärkung eines Ramanverstärkers

Procédé de commande automatique de gain d'un amplificateur Raman

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**28.06.2006 Bulletin 2006/26**

(73) Proprietor: **Alcatel Lucent**
**75008 Paris (FR)**

(72) Inventors:
• **Leplingard, Florence**
**78350 Jouy-en-Josas (FR)**
• **Martinelli, Catherine**
**91120 Palaiseau (FR)**

(74) Representative: **Urlichs, Stefan et al**
**Alcatel Lucent**
**Intellectual Property & Standards**
**70430 Stuttgart (DE)**

(56) References cited:
**EP-A- 1 469 621**      **WO-A-00/04613**
**WO-A-00/49721**      **US-B2- 6 734 954**

EP 1 675 283 B1

**Description**

**Field of the Invention**

The invention relates to the field of optical fiber communication systems and more particularly to a method and apparatus for controlling the gain of a Raman amplifier.

**Background of the Invention**

In optical fiber communication systems, optical signals propagating along an optical fiber undergo signal attenuation due to absorption and scattering in optical fibers. Therefore, optical signals require periodic amplification over long distances, which can be performed either by electrical repeaters or by optical amplifiers. Known optical amplifier types include Erbium-doped fiber amplifiers (EDFAs), semiconductor optical amplifiers and Raman amplifiers. Due to its flat gain over a wide signal wavelength band, the Raman amplifier has gained increasing attention in the recent past as ideal amplifier candidate for wavelength division multiplex (WDM) signal transmission.

The Raman amplification process is based on the Raman effect, which is a non-linear optical process that occurs only at high optical intensities and involves coupling of light propagating through the non-linear medium to vibrational modes of the medium, and re-radiation of the light at a different wavelength. Re-radiated light upshifted in wavelength is commonly referred to as a Stokes line, whereas light downshifted in wavelength is referred to as an Anti-Stokes line. The Raman effect is described by quantum mechanics as scattering of photons at molecules which thereby undergo a transition of their vibrational state. Raman amplification involves stimulated Raman scattering, where the incident beam, having a higher optical frequency, often referred to as the pump beam, is used to amplify the lower frequency beam often referred to as the Stokes beam or the signal beam through the Raman effect.

In contrast to EDFAs, where the amplification properties are dependent only on the EDFA module, the transmission line itself is used as the gain medium of a distributed Raman amplifier and thus, amplification properties such as gain and gain equalization are closely related to the type, properties and characteristics of the fiber used and the fiber condition. In a silica fiber for example, the strongest Raman scattering, i.e. the maximum Roman gain occurs at a frequency shift of about 13.2 THz, which corresponds to a wavelength shift of about 50 - 100 nm for pump wavelengths between about 1 and 1.5 $\mu$m. It is impossible to accurately predict the performance of a Raman amplifier, including gain, gain equalization and noise spectrum, without thorough knowledge of the fiber types, properties characteristics, and condition along the fiber optic transmission line.

Distributed Raman amplification is typically characterized by the on-off gain, i.e., the ratio of the signal power measured at the output end of the fiber when the pumps are on relative to the signal power when the pumps are off. In order to operate a particular Raman amplifier, the gain characteristic of the corresponding fiber link must be known to allow proper adjustment of the pump power. It would be possible to do a preliminary calibration of the Raman efficiency of various fiber types versus the pump power in the laboratory and to use these values for actual installations in the field. But in fact, the Raman gain strongly depends on the loss of the fiber at the pump wavelength and the actual attenuation characteristic of an installed fiber link is not known in advance but must be determined in the field. In addition, local losses due to for example fiber splices cannot be predicted accurately and the installed fiber may not have exactly the same Raman efficiency as the fiber of that type that had been preliminary calibrated in the laboratory. Methods that trust in nominal fiber characteristics only, can therefore achieve an accuracy not better than about +/-20%. It is therefore necessary to control the Raman gain in the field.

US 6,734,954 describes a system and method for automatic Raman gain control by a closed loop control strategy using system wavelength profile information to provide accurate derivation of Raman gain in a fiber optic span. Optical spectrum analyzers are used to monitor wavelength profiles, which permits the mapping of transmit and receive profiles within a span. This mapping information is then collected in a central location, such that the Raman gain within the span may be derived. Measurement of an entire gain spectrum is, however, cumbersome and unnecessary as it results in more information than are required to adjust the gain curve.

It is thus an object of the present invention to provide a simplified method and related apparatus for controlling the gain characteristic of a distributed Raman amplifier.

**Summary of the Invention**

These and other objects that appear below are achieved by estimating the gain curve of a Raman amplifier in a simulation, selecting data channels for an online measurement and determining target gain values for the selected channels from the simulated gain curve. The number of selected channels corresponds to the number of pump wavelengths.

In particular, the method of controlling the gain of a Raman amplifier (RA) in a fiber optic communication system comprising an optical fiber (F) has the following steps:

  a) launching $N_P$ pump light signals having different pump wavelengths into said fiber (F), where $N_P$ is an integer greater than 1;

  b) estimating the gain curve as a linear combination of $N_P$ predetermined gain shape curves corresponding to said $N_P$ pump light signals;

  c) selecting $N_P$ signal wavelengths on this curve and recording their target gain values;

  d) measuring the signal power of said $N_P$ signal wavelengths; and

  e) varying the power of at least one of said pump light signals to minimize a power difference between the measured power value of any of said $N_P$ signal channels and its estimated target gain value.

A controller for a Raman amplifier in a fiber optic communication system is configured with the target gain values of the selected $N_P$ channels, compares measured values with the $N_P$ target gain value, and varies the power of at least one of the pump light signals to minimize a power difference between the measured power value of any of the $N_P$ signal channels and its estimated target gain value.

The invention requires to measure the gain of only $N_P$ channels for a feedback process and not the gain over the entire signal spectrum. Thus, only $N_P$ signal filters and $N_P$ photodiodes are necessary for signal detection. Moreover, the invention does not require any knowledge about the Raman efficiency of the installed link fiber but the normalized Raman efficiency, i.e. the shape of the curve, is sufficient. This is a very interesting feature since link fibers usually have very close Raman efficiency shapes, i.e., differ only by a proportion coefficient. Furthermore, no information about the attenuation of the fiber at the pump wavelength is required and Raman pump-pump interactions need not be calculated. As a consequence, the proposed control algorithm is fast and easy to implement.

### Brief Description of the Drawings

Preferred embodiments of the present invention will now be described with reference to the accompanying drawings in which

figure 1    shows a Raman amplifier with $N_P$ pumps installed in a fiber optical communication system;
figure 2    shows another Raman amplifier with $N_P$ pumps installed in a fiber optical communication system, which uses a backward pumping scheme;
figure 3    shows an estimation of the gain curve derived from a linear combination of $N_P$ predetermined gain shape curves corresponding to the $N_P$ pumps;
figure 4    shows the gain shape after fine adjustment using $N_P$ signal channels; and
figure 5    a comparison with a gain curve obtained without use of the invention.

### Detailed Description of the Invention

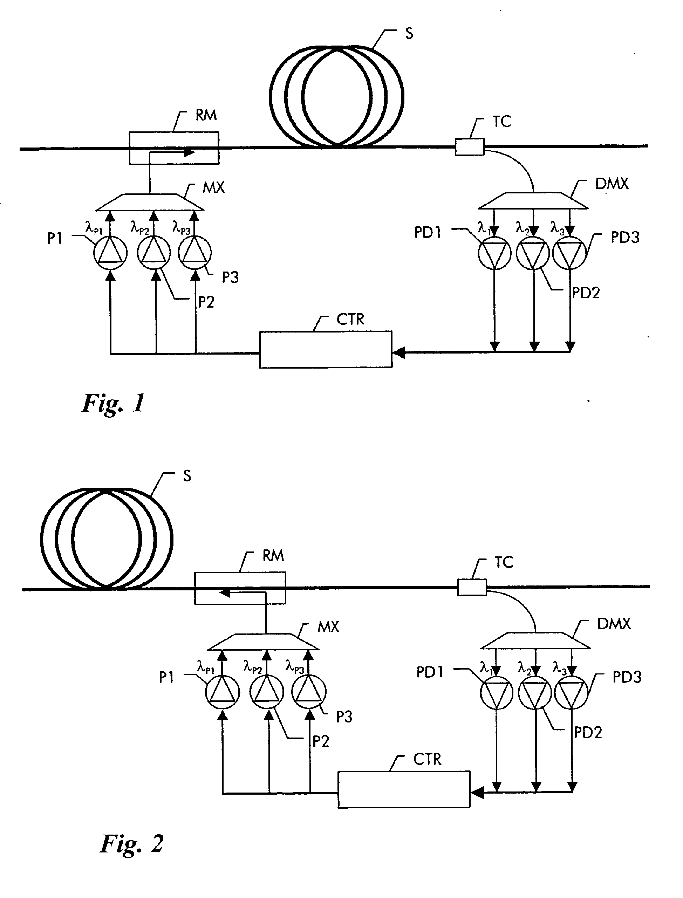

A fiber optical communication system with Raman amplifier is shown in figure 1. It comprises an optical fiber S, which carries a number of signal channels at different signal wavelengths $\lambda_i$. Three pump lasers P1-P3 are installed which emit pump light signals at wavelengths $\lambda_{Pi}$, $\lambda_{P2}$, and $\lambda_{P3}$, respectively. The pump light signals are fed via a multiplexer MX and a Raman multiplexer RM into the fiber S, where they cause amplification of the signal channels by stimulated Raman scattering.

In order to achieve the desired gain characteristic, the power values of the pump lasers P1-P3 must be adjusted properly. Therefore, three selected exemplary channels are measured and their signal energy compared. Therefore, a tap coupler TC extracts a fraction of the signal light from the fiber S. A demultiplexer DMX is coupled to the tap coupler TC and extracts the three selected signal wavelengths $\lambda_i$, $\lambda_2$, and $\lambda_3$, which are then fed to corresponding photo detectors PD1, PD2, and, PD3, respectively. The demultiplexer DMX contains the filters that match the selected signal wavelengths $\lambda_i$, $\lambda_2$, and $\lambda_3$.

The measured values are communicated via feedback channels to a controller CTR, which compares the measured values with target gain values and determines whether the pump power of any of the lasers must be reduced or increased and adjusts the pump powers accordingly. The controller CTR may be located at the premises where the Raman pumps P1-P3 are installed, at a central place in the network or at the site of the detectors. The pump unit can either be composed of $N_P$ individual pump lasers P1-P3 having different pump wavelengths ($\lambda_{P1}$, $\lambda_{P2}$, $\lambda_{P3}$) but can

alternatively also be a single Raman fiber laser that emits the $N_P$ pump light signals.

In another preferred embodiment, a backward Raman pumping scheme is used, so that the controller CTR is located at the same site as the means measuring the output signal power and the pump unit. This is shown in figure 2.

The gain adjustment method of the Raman pumps P1-P3 is performed as follows. In a preparation phase, the target gain profile are estimated by a simulation without taking into account any pump interactions. This initial estimation requires only information about the number $N_P$ of Raman pumps (i.e., three in the specific embodiment), the wavelengths of these pumps (i.e. $\lambda_{Pi}$, $\lambda_{P2}$, and $\lambda_{P3}$) and the normalized Raman efficiency of the fiber.

The normalized Raman efficiency curve $C_R(\Delta v)$ of the fiber S, where $\Delta v$ is the frequency shift between pump and signal, is known for instance from an offline measurement, from predefined fiber characteristics or from theoretical calculations. The Raman efficiency curves of the individual pumps P1-P3 are weighted with weighting coefficients a1, a2, a3, respectively. The resulting superposition is described by the function $G(v_s)$: (with $v_i = c/\lambda_i$)

$$G(v_S) = a1\ C_R(v1-v_S) + a2\ C_R(v2-v_S) + a3\ C_R(v3-v_S)$$

$G(v_S)$ is a function that is proportional to the total Raman on-off gain expressed in dB and defines the shape of the total Raman gain curve. The coefficients a1, a2, a3 are adjusted in such a way that the resulting gain curve has the desired shape. In the preferred embodiment, the desired shape has a flat gain. Other shapes are, however, also possible such as a slope, which may depend one the choice and particular needs of the user.

The coefficients a, b and, c have no practical meaning for the adjustment itself. They simply define what would be the optimal gain curve that can theoretically be achieved when the pump powers are properly adjusted. From this estimated curve, three $N_P$ signal channels in the signal transmission bandwidth are chosen, which will serve as a basis for the actual adjustment. These channels are in the preferred embodiment those channels whose optical frequency $v_S$ values are associated to local maxima of G. The G values $G(v_{S1})$, $G(v_{S2})$, $G(v_{S3})$ determined from the simulation of these channels are then stored in the controller CTR as target values for the adjustment.

It should be noted that this simulation is a preliminary step of the method, only, and is not necessarily implemented in the controller CTR. The $N_P$ target values, however, are loaded as fixed external parameters into the controller for the subsequent adjustment.

The controller CTR is then able to perform the actual adjustment of the pump powers to fit the simulated curve. The adjustment may start from arbitrary power values of the $N_P$ pumps. According to the invention, only the $N_P$ selected signal channels are used for the on-line adjustment of the Raman amplification system. The adjustment is then achieved by a feedback process that adjusts the pump powers of the $N_P$ pumps so that the desired on-off gain values $G(v_{S1})$, $G(v_{S2})$, $G(v_{S3})$ determined from the above simulation for these channels is reached. Thus, by monitoring only $N_P$ signal gains, the entire Raman gain curve corresponding to the simulated curve G can be obtained.

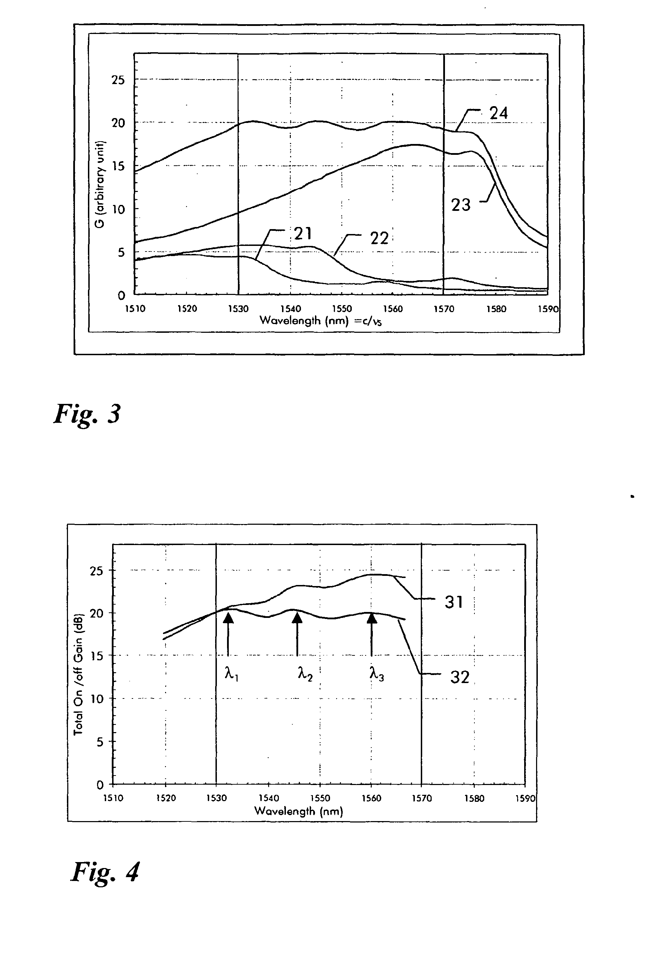

An example of how the controller CTR adjusts the pumps P1-P3 is shown in figures 3 and 4. The pump wavelengths are $\lambda_{P1}$ = 1425nm, $\lambda_{P2}$ = 1436nm, and $\lambda_{P3}$ = 1463nm. The gain shape curves corresponding to these three wavelengths are shown in the diagram of figure 3 as curves 21, 22, and 23, respectively. The desired gain shape is a curve as flat as possible over the entire wavelength range from 1530 to 1570 nm. The coefficients a1, a2, and a3, i.e., the ratio of the power values of the three pumps, are estimated to a1 =8, a2=10, and a3=30. The resulting superposition G is shown as curve 24. G is shown in arbitrary units but is proportional to the total dB-expressed Raman on-off gain. Depending on the actual needs in the fiber optic communication system, this amplification curve can be multiplied by a factor that yields the required gain of for instance 20dB.

The three signal channels that are selected for the adjustment are wavelength channels $\lambda_1$=1532nm, $\lambda_2$=1546nm, and $\lambda_3$=1560nm. The selected channels correspond to the peaks of the gain curve, which is the preferred embodiment, but can also be chosen differently.

It has to be noted that since there is Raman interaction between the pumps, the pump power ratios simulated in figure 3 do not reproduce the real gain. This is shown in figure 4: the pump interactions induce a power transfer from the lower pump wavelengths to the higher pump wavelengths, which results in a tilted gain profile with a positive slope, which is shown as curve 31 in figure 4. In essence, in order to flatten the gain curve so that it matches the desired curve, the pump power of the lowest wavelength pump has to be increased while the power of the highest pump wavelength has to be reduced.

Accordingly, the adjustment of the power of the three pump signals is performed as follows:

- The initial values of the pump power are chosen arbitrarily.
- The gain difference between the three target gain values and the actual measured gain values is calculated.
- The power of the pump that impacts the most on the signal wavelength having the higher difference between the target gain value and the actual gain value is adjusted.

- The gain difference is measured again.
- The process the latter two steps are repeated until the desired gain for the three channels is reached, i.e., when the curve shown as curve 32 in figure 4 is reached.

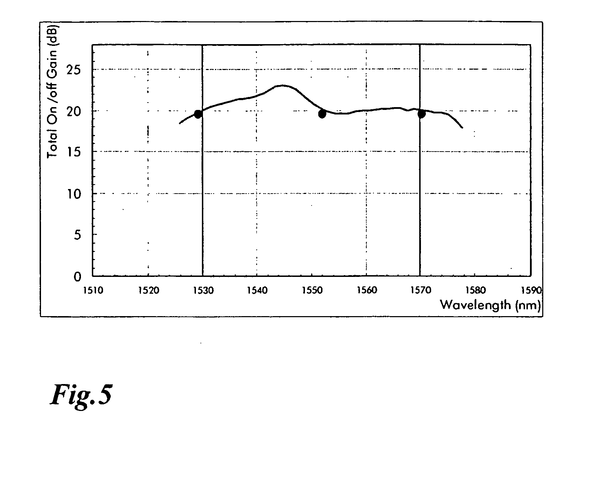

A principle of the invention is to estimate the gain curve in a simulation, select data channels for the online measurement and determine target gain values for these selected channels from the simulated gain curve. The benefit of this can be demonstrated easily by a simple example in comparison to the one shown in figure 3. Assume that without the above simulation, the channels to be measured are chosen to $\lambda_1$'=1530nm, $\lambda_2$'=1552nm, and $\lambda_3$'=1570nm. Assume further that the target gain value shall be 20dB for all three channels - which would hopefully result in a flat gain curve. The result, however, of adjusting the pump power values to 20dB in this case is shown in figure 5. As can be observed from figure 5, the gain variation is much greater than that in the optimized example shown in figure 3, i.e., 3,5dB rather than 1dB.

In an improvement of the invention, dummy channels are inserted at the selected wavelengths $\lambda_1$, $\lambda_2$, and $\lambda_3$ by the transmitter rather than real data channels in order to make sure that these channels are always available for the online adjustment procedure as described above since data channels might be suspended or lost due to a failure at some point in the network.

Having described a preferred embodiment of the invention, it should be noted that the invention is not limited to the particulars described herein but that various modifications can be made without departing from the principles of the invention, as defined by the appended claims.

**Claims**

1.  A method of controlling the gain of a Roman amplifier in a fiber optic communication system comprising an optical fiber (S) ; the method comprising the step of

    a) launching $N_P$ pump light signals having different pump wavelengths ($\lambda_{P1}$, $\lambda_{P2}$, $\lambda_{P3}$) into said fiber (S), where $N_P$ is an integer greater than 1;
    **characterized by** the steps of
    b) estimating the gain curve (24) as a linear combination of $N_P$ predetermined gain shape curves (21, 22, 23) corresponding to said $N_P$ pump light signals;
    c) selecting $N_P$ signal wavelengths ($\lambda_1$, $\lambda_2$, $\lambda_3$) on this curve (24) and determining their target gain values ;
    d) measuring the signal power of said $N_P$ signal wavelengths ($\lambda_1$, $\lambda_2$, $\lambda_3$); and
    e) varying the power of at least one of said pump light signals to minimize a power difference between the measured power value of any of said $N_P$ signal channels ($\lambda_1$, $\lambda_2$, $\lambda_3$) and its estimated target gain value.

2.  A method according to claim 1, comprising repeating steps d) and e) until said target gain value for said $N_P$ signal wavelengths ($\lambda_1$, $\lambda_2$, $\lambda_3$) is achieved.

3.  A method according to claim 1, wherein for said step b), Raman pump interaction is neglected.

4.  A method according to claim 1, wherein said $N_P$ signal wavelengths ($\lambda_1$, $\lambda_2$, $\lambda_3$) are selected near the local maxima of said estimated gain curve (24).

5.  A method according to claim 1, wherein during said step e) the power of the pump signal that has the highest impact on the signal wavelength having the highest difference between the target gain and the actual gain is adjusted.

6.  A method according to claim 1, wherein dummy channels are inserted at said selected wavelengths ($\lambda_1$, $\lambda_2$, $\lambda_3$).

7.  A controller (CTR) for controlling the gain of a Roman amplifier in a fiber optic communication system comprising an optical fiber (S), wherein said Roman amplifier comprises a pump unit (P1, P2, P3) for launching $N_P$ pump light signals having different pump wavelengths ($\lambda_{P1}$, $\lambda_{P2}$, $\lambda_{P3}$) into said fiber (S), where $N_P$ is an integer greater than 1;
    **characterized in that**
    said controller (CTR) comprises means for varying the power of at least one of said $N_P$ pump light signals to minimize a power difference between a power value measured for any of $N_P$ signal wavelengths ($\lambda_1$, $\lambda_2$, $\lambda_3$) and a respectively corresponding one of $N_P$ configured target gain valves, and wherein said controller is adapted to obtain said target values by estimating the gain curve (24) of said Raman amplifier as a superposition of $N_P$ predetermined gain shape curves (21, 22, 23) corresponding to said $N_P$ pump wavelengths ($\lambda_{P1}$, $\lambda_{P2}$, $\lambda_{P3}$), by selecting said $N_P$ signal wave-

lengths ($\lambda_1$, $\lambda_2$, $\lambda_3$) on this curve (24), and by determining said Np target gain values from said estimated curve (24).

**8.** An amplifier comprising a pump unit for launching $N_P$ pump light signals having different pump wavelengths ($\lambda_{P1}$, $\lambda_{P2}$, $\lambda_{P3}$) into a fiber (S) **characterized by** the amplifier further comprising a controller according to claim 7.


**Patentansprüche**

**1.** Verfahren zum Steuern der Verstärkung eines Raman-Verstärkers in einem faseroptischen Kommunikationssystem, beinhaltend eine Lichtleitfaser (S), wobei das Verfahren den Schritt beinhaltet,

   a) $N_p$ Pumplichtsignale mit unterschiedlichen Pumpwellenlängen ($\lambda_{P1}$, $\lambda_{P2}$, $\lambda_{P3}$) in die besagte Faser (S) einzuspeisen, wobei $N_p$ eine ganze Zahl größer 1 ist,
   **gekennzeichnet durch** die Schritte,
   b) die Verstärkungskurve (24) als lineare Kombination aus $N_p$ zuvor festgelegten Verstärkungsverlaufskurven (21, 22, 23) entsprechend den $N_p$ besagten Pumplichtsignalen abzuschätzen,
   c) $N_p$ Signalwellenlängen ($\lambda_1$, $\lambda_2$, $\lambda_3$) auf dieser Kurve (24) auszuwählen und ihre Zielwerte zu bestimmen,
   d) die Signalleistung der besagten $N_p$ Signalwellenlängen ($\lambda_1$, $\lambda_2$, $\lambda_3$) zu messen und
   e) die Leistung mindestens eines der besagten Pumplichtsignale zu variieren, um eine Leistungsdifferenz zwischen dem gemessenen Leistungswert eines beliebigen der besagten $N_p$ Signalkanäle ($\lambda_1$, $\lambda_2$, $\lambda_3$) und seinem geschätzten Verstärkungs-Zielwert zu minimieren.

**2.** Verfahren gemäß Anspruch 1, beinhaltend das Wiederholen der Schritte d) und e), bis der besagte verstärkungs-Zielwert für die besagten $N_p$ Signalwellenlängen ($\lambda_1$, $\lambda_2$, $\lambda_3$) erreicht ist.

**3.** Verfahren gemäß Anspruch 1, wobei für den besagten Schritt b) eine Raman-Pumpwechselwirkung vernachlässigt wird.

**4.** Verfahren gemäß Anspruch 1, wobei die besagten $N_p$ Signalwellenlängen ($\lambda_1$, $\lambda_2$, $\lambda_3$) nahe den lokalen Maxima der besagten abgeschätzten Verstärkungskurve (24) gewählt werden.

**5.** Verfahren gemäß Anspruch 1, wobei während des besagten Schrittes e) die Leistung des Pumpsignals, das sich am stärksten auf die Signalwellenlänge mit der größten Differenz zwischen dem Verstärkungs-Zielwert und dem tatsächlichen Verstärkungswert auswirkt, eingestellt wird.

**6.** Verfahren gemäß Anspruch 1, wobei Ersatzkanäle bei den besagten ausgewählten Wellenlängen ($\lambda_1$, $\lambda_2$, $\lambda_3$) eingefügt werden.

**7.** Controller (CTR) zum Steuern der Verstärkung eines Raman-Verstärkers in einem eine Lichtleitfaser (S) beinhaltenden faseroptischen Kommunikationssystem, wobei der besagte Raman-Verstärker eine Pumpeinheit (PI, P2, P3) zum Einspeisen von $N_p$ Pumplichtsignalen mit unterschiedlichen Pumpwellenlängen ($\lambda_{P1}$, $\lambda_{P2}$ und $\lambda_{P3}$) in die besagte Faser (S) beinhaltet, und wobei $N_p$ eine ganze Zahl größer 1 ist,
**dadurch gekennzeichnet, daß**
der besagte Controller (CTR) Mittel zum variieren der Leistung mindestens eines der besagten $N_p$ Pumplichtsignale beinhaltet, um eine Leistungsdifferenz zwischen einem Leistungswert, der für eine beliebige der besagten $N_p$ Signalwellenlängen ($\lambda_1$, $\lambda_2$, $\lambda_3$) gemessen wurde, und jeweils einem entsprechenden der $N_p$ konfigurierten Verstärkungs-Zielwerte zu minimieren, und wobei der besagte Controller dafür ausgelegt ist, die besagten Zielwerte durch Abschätzen der verstärkungskurve (24) des besagten Raman-Verstärkers als eine Überlagerung von $N_p$ zuvor festgelegten Verstärkungs-Kurvenverläufen (21, 22, 23), die den besagten $N_p$ Pumpwellenlängen ($\lambda_{p1}$, $\lambda_{p2}$, $\lambda_{p3}$) entsprechen, zu gewinnen, indem die besagten $N_p$ Signalwellenlängen ($\lambda_1$, $\lambda_2$, $\lambda_3$) auf dieser Kurve (24) ausgewählt werden, und indem die besagten $N_p$ Verstärkungszielwerte aus der besagten abgeschätzten Kurve (24) bestimmt werden.

**8.** Verstärker, beinhaltend eine Pumpeinheit zum Einspeisen von $N_p$ Pumplichtsignalen mit unterschiedlichen Pumpwellenlängen ($\lambda_{p1}$, $\lambda_{p2}$, $\lambda_{p3}$) in eine Faser (S), **dadurch gekennzeichnet, daß** der Verstärker ferner einen Controller gemäß Anspruch 7 beinhaltet.

**Revendications**

1. Procédé de contrôle du gain d'un amplificateur de Raman dans un système de communication par fibres optiques comprenant une fibre optique (S) ; le procédé comprenant l'étape de

   a) lancement de $N_p$ signaux optiques de pompe ayant des longueurs d'onde de pompe différentes ($\lambda_{P1}$, $\lambda_{P2}$, $\lambda_{P3}$) dans ladite fibre (S), où $N_p$ est un entier supérieur à 1 ;
   **caractérisé par** les étapes d'
   b) estimation de la courbe de gain (24) comme une combinaison linéaire de $N_p$ courbes de forme de gain prédéterminées (21, 22, 23) correspondant audits $N_p$ signaux optiques de pompe ;
   c) sélection de $N_p$ longueurs d'onde de signaux ($\lambda_{P1}$, $\lambda_{P2}$, $\lambda_{P3}$) sur cette courbe (24) et détermination de leurs valeurs de gain cibles ;
   d) mesure de la puissance de signal desdites Np longueurs d'onde de signaux ($\lambda_{P1}$, $\lambda_{P2}$, $\lambda_{P3}$) ; et
   c) variation de la puissance d'au moins un desdits signaux optiques de pompe pour minimiser une différence de puissance entre la valeur de puissance mesurée de l'un quelconque desdits $N_p$ canaux de signaux ($\lambda_{P1}$, $\lambda_{P2}$, $\lambda_{P3}$) et sa valeur de gain cible estimée.

2. Procédé selon la revendication 1, comprenant la répétition des étapes d) et e) jusqu'à ce que ladite valeur de gain cible pour lesdites $N_p$ longueurs d'onde de signaux ($\lambda_{P1}$, $\lambda_{P2}$, $\lambda_{P3}$) soit obtenue.

3. Procédé selon la revendication 1, dans lequel pour ladite étape b), une interaction de pompe de Raman est négligée.

4. Procédé selon la revendication 1, dans lequel lesdites $N_p$ longueurs d'onde de signaux ($\lambda_{P1}$, $\lambda_{P2}$, $\lambda_{P3}$) sont sélectionnées à proximité des maxima locaux de ladite courbe de gain estimée (24).

5. Procédé selon la revendication 1, dans lequel pendant ladite étape e) la puissance du signal de pompe qui a l'impact le plus important sur la longueur d'onde de signal ayant la différence la plus importante entre le gain cible et le gain réel est réglée.

6. Procédé selon la revendication 1, dans lequel des canaux factices sont insérés au niveau desdites longueurs d'onde sélectionnées ($\lambda_{P1}$, $\lambda_{P2}$, $\lambda_{P3}$).

7. Contrôleur (CTR) pour contrôler le gain d'un amplificateur de Raman dans un système de communication par fibres optiques comprenant une fibre optique (S), dans lequel ledit amplificateur de Raman comprend une unité de pompe (P1, P2, P3) pour lancer $N_p$ signaux optiques de pompe ayant des longueurs d'onde de pompe différentes ($\lambda_{P1}$, $\lambda_{P2}$, $\lambda_{P3}$) dans ladite fibre (S), où $N_p$ est un entier supérieur à 1 ;
   **Caractérisé par**
   ledit contrôleur (CTR) comprenant des moyens pour faire varier la puissance d'au moins un desdits $N_p$ signaux optiques de pompe pour minimiser une différence de puissance entre une valeur de puissance mesurée pour l'une quelconque des $N_p$ longueurs d'onde de signaux ($\lambda_{P1}$, $\lambda_{P2}$, $\lambda_{P3}$) et une valeur respectivement correspondante parmi $N_p$ valeurs de gain cibles configurées, et dans lequel ledit contrôleur est apte à obtenir lesdites valeurs cibles par l'estimation de la courbe de gain (24) dudit amplificateur de Raman comme une superposition de $N_p$ courbes de forme de gain prédéterminées (21, 22, 23) correspondant auxdites $N_p$ longueurs d'onde de pompe ($\lambda_{P1}$, $\lambda_{P2}$, $\lambda_{P3}$) par la sélection desdites $N_p$ longueurs d'onde de signaux ($\lambda_{P1}$, $\lambda_{P2}$, $\lambda_{P3}$) sur cette courbe (24), et par la détermination desdites $N_p$ valeurs de gain cibles à partir de ladite courbe estimée (24).

8. Amplificateur comprenant une unité de pompe pour lancer $N_p$ signaux optiques de pompes ayant des longueurs d'onde de pompe différentes ($\lambda_{P1}$, $\lambda_{P2}$, $\lambda_{P3}$) dans une fibre (S) **caractérisé par** l'amplificateur comprenant en outre un contrôleur selon la revendication 7.

*Fig. 1*

*Fig. 2*

**Fig. 3**

**Fig. 4**

*Fig.5*